# EUROPEAN PATENT APPLICATION

(11) **EP 1 980 998 A2**
(43) Date of publication of application: **15.10.2008**
(21) Application number: 08006539.4
(22) Date of filing: 31.03.2008
(51) Int. Cl.: G06T 15/00, G06F 13/10, G06T 15/40, G06T 15/50

(54) **Programmable graphics processing element**

(30) Priority: 13.04.2007 US 735353
(71) Applicant: Qualcomm Incorporated, San Diego, CA 92121-1714 (US)
(72) Inventor: Guofang, Jiao, San Diego, CA 92121-1714 (US); Chen, Frank Lingjun, San Diego, CA 92121-1714 (US); Yu, Chun, San Diego, CA 92121-1714 (US); Du, Yun, San Diego, CA 92121-1714 (US)
(74) Representative: Heselberger, Johannes

(57) **Abstract**

In general, this disclosure describes techniques for performing graphics operations using programmable processing units in a graphics processing unit (GPU). As described herein, a GPU includes a graphics pipeline that includes a programmable graphics processing element (PGPE). In accordance with the techniques described herein, an arbitrary set of instructions is loaded into the PGPE. Subsequently, the PGPE may execute the set of instructions in order to generate a new pixel object. A pixel object describes a displayable pixel. The new pixel object may represent a result of performing a graphics operation on a first pixel object.
A display device may display a pixel described by the new pixel object.

## Description

### TECHNICAL FIELD

The invention relates to computer graphics and, particularly, to graphics processing units.

### BACKGROUND

Graphics processing units (GPUs) are specialized hardware units used to render 2-dimensional (2-D) and/or 3-dimensional (3-D) images for various applications such as video games, graphics, computer-aided design (CAD), simulation and visualization tools, imaging, etc. A GPU may perform various graphics operations to render an image. One such graphics operation is blending, which is also commonly referred to as alpha blending or alpha compositing. Blending may be used to obtain transparency effects in an image. Blending may also be used to combine intermediate images that may have been rendered separately into a final image. Blending typically involves combining a source color value with a destination color value in accordance with a set of equations. The equations are functions of the color values and alpha values. Different results may be obtained with different equations and/or different blending factors.

### SUMMARY

In general, this disclosure describes techniques for performing graphics operations using programmable processing units in a graphics processing unit (GPU). As described herein, a GPU includes a graphics pipeline that includes a programmable graphics processing element (PGPE). In accordance with the techniques described herein, an arbitrary set of instructions is loaded into the PGPE. Subsequently, the PGPE may execute the set of instructions in order to generate a new pixel object. A pixel object describes a displayable pixel. The new pixel object may represent a result of a graphics operation on an input pixel object. A display device may display a pixel described by the new pixel object.

In one aspect, a method comprises receiving a set of instructions in a PGPE. The PGPE is a processing element in a graphics pipeline of a GPU. The method also comprises receiving a first pixel object with the PGPE. In addition, the method comprises generating a second pixel object by executing the first set of instructions with the PGPE. The second pixel object represents a result of performing a first graphics operation on the first pixel object. The first graphics operation comprises a graphics operation selected from a group consisting of: a blending operation, a buffer compositing operation, a texture combining operation, a texture filtering operation, and a depth/stencil operation

In another aspect, a device comprises a GPU that includes a graphics pipeline. The graphics pipeline comprises a first processing element that outputs a first pixel object. The graphics pipeline also comprises a PGPE. The PGPE comprises an instruction module that receives and stores a first set of instructions. In addition the PGPE comprises an input module that receives the first pixel object from the first processing element. The PGPE also comprises an arithmetic logic unit (ALU) that generates a second pixel object by performing a first sequence of arithmetic operations. Each of the arithmetic operations in the first sequence of arithmetic operations is specified by a different instruction in the first set of instructions. The second pixel object represents a result of performing a first graphics operation on the first pixel object. The first graphics operation comprises a graphics operation selected from a group consisting of: a blending operation, a buffer compositing operation, a texture combining operation, a texture filtering operation, and a depth/stencil operation

In another aspect, a PGPE comprises an instruction module that receives and stores a set of instructions. The PGPE also comprises an input module that receives a first pixel object from a graphics processing element that precedes the PGPE in a graphics pipeline in a GPU. In addition, the PGPE comprises an ALU that generates a second pixel object by performing a sequence of arithmetic operations. Each of the arithmetic operations in the sequence of arithmetic operations is specified by a different instruction in the set of instructions. The second pixel object represents a result of performing a graphics operation on the first pixel object. The first graphics operation is a graphics operation selected from a group consisting of: a blending operation, a buffer compositing operation, a texture combining operation, a texture filtering operation, and a depth/stencil operation

In another aspect, a computer-readable medium comprises instructions. When a processor executes the instructions, the instructions cause a PGPE to receive a set of instructions with the PGPE. The PGPE is a processing element in a graphics pipeline of a GPU. The instructions also cause the PGPE to receive a first pixel object from a graphics processing element that precedes the PGPE in the graphics pipeline. In addition, the instructions cause the PGPE to generate a second pixel object by executing the set of instructions with the PGPE. The second pixel object represents a result of performing a first graphics operation on the first pixel object. The first graphics operation is a graphics operation selected from a group consisting of: a blending operation, a buffer compositing operation, a texture combining operation, a texture filtering operation, and a depth/stencil operation

In another aspect, a device comprises means for processing graphics. The means for processing graphics includes a graphics pipeline. The graphics pipeline comprises means for generating and outputting a first pixel object. The graphics pipeline also comprises means for performing graphics operations. The means for blending pixel objects comprises means for receiving and storing a set of instructions. The means for blending pixel objects also comprises means for receiving the first pixel object. In addition the means for blending pixel objects comprises means for generating a second pixel object by performing a sequence of arithmetic operations. Each of the arithmetic operations is specified by a different instruction in the set of instructions indicated by the instructions. The second pixel object represents a result of performing a graphics operation on the first pixel object. The graphics operation is a graphics operation selected from a group consisting of: a blending operation, a buffer compositing operation, a texture combining operation, a texture filtering operation, and a depth/stencil operation

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an exemplary computing device that includes a graphics processing unit (GPU) that uses a programmable pixel-blending processing element.

FIG. 2 is a block diagram illustrating details of an exemplary programmable pixel-blending processing element.

FIG. 3 is a flowchart illustrating an exemplary operation of a programmable pixel-blending processing element.

### DETAILED DESCRIPTION

In general, this disclosure describes techniques for performing graphics operations using programmable processing units in a graphics processing unit (GPU). As described herein, a GPU includes a graphics pipeline that includes a programmable graphics processing element (PGPE). In accordance with the techniques described herein, an arbitrary set of instructions is loaded into the PGPE. Subsequently, the PGPE may execute the set of instructions in order to generate a new pixel object. A pixel object describes a displayable pixel. A pixel object may include one or more color values. For example, a pixel object from preceding pipeline element may contain four color values. The new pixel object may represent a result of performing a graphics operation on a first pixel object. A display device may display a pixel described by the new pixel object.

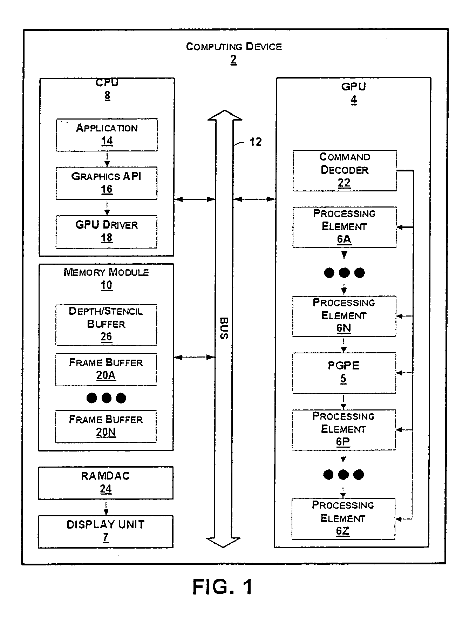

FIG. 1 is a block diagram illustrating an exemplary computing device 2 that includes a graphics processing unit (GPU) 4 that uses a programmable graphics processing element (PGPE) 5. Computing device 2 may comprise a personal computer, a desktop computer, a laptop computer, a workstation, a video game platform or console, a cellular or satellite radiotelephone, a landline telephone, an Internet telephone, a handheld device such as a portable video game device or a personal digital assistant, a personal music player, a server, an intermediate network device, a mainframe computer, or another type of device that outputs graphical information.

As illustrated in the example of FIG. 1, computing device 2 includes a central processing unit (CPU) 8, GPU 4, and a Random Access Memory (RAM) module 10. CPU 8, GPU 4, and RAM module 10 may communicate using a bus 12. Bus 12 may comprise a third generation bus such as a Hyper-Transport bus or an InfiniBand bus. Alternatively, bus 12 may comprise a second generation bus such as an Advanced Graphics Port bus, a Peripheral Component Interconnect (PCI) Express bus, an Advanced eXentisible Interface (AXI) bus or another type of bus or device interconnect. CPU 8 may comprise a general-purpose or a special-purpose microprocessor. For example, CPU 8 may comprise a Core 2 Processor provided by Intel Corporation of Santa Clara, California or another type of microprocessor, such as an ARM11 microprocessor. GPU 4 is a dedicated graphics rendering device. GPU 4 may be integrated into the motherboard of computing device 2, may be present on a graphics card that is installed in a port in the motherboard of computing device 2, or may be otherwise configured to interoperate with computing device 2. RAM module 10 may be a Synchronous Dynamic Random Access Memory module, a Direct Rambus Dynamic Random Access Memory module, a Double Data Rate 2 or 3 Synchronous Random Access Memory module, or another type of random access memory module.

Furthermore, computing device 2 may include a display unit 7. Display unit 7 may comprise a monitor, a television, a projection device, a liquid crystal display, a plasma display panel, a light emitting diode (LED) array, a cathode ray tube display, electronic paper, a surface-conduction electron-emitted display (SED), a laser television display, a nanocrystal display , or another type of display unit. Display unit 7 may be housed within computing device 2. For instance, display unit 7 may be a screen of a mobile telephone. Alternatively, display unit 7 may be external to computer device 2 and may communicate with computing device 2 via a wired or wireless communications link. For instance, display unit 7 may be a computer monitor or flat panel display connected to a personal computer via a cable or wireless link.

A software application 14 may execute on CPU 8. Software application 14 may comprise a video game, a graphical user interface engine, a computer-aided design program for engineering or artistic applications, or another type of software application that uses two-dimensional (2D) or three-dimensional (3D) graphics.

When CPU 8 is executing software application 14, software application 14 may invoke subroutines of a graphics processing application programming interface (API) 16. For example, software application 14 may invoke subroutines of an OpenVG API, as defined in a document "OpenVG Specification, Version 1.0," July 28, 2005, which is publicly available and hereinafter referred to as OpenVG. In another example, software application 14 may invoke subroutines of an OpenGL API, a Direct3D API, a Graphics Device Interface (GDI), Quartz, QuickDraw, or another type of 2D or 3D graphics processing API.

When software application 14 invokes a subroutine of graphics processing API 16, graphics processing API 16 may invoke one or more subroutines of a GPU driver 18 that executes on CPU 8. GPU driver 18 may comprise a set of software and/or firmware instructions that provide an interface between graphics processing API 16 and GPU 4. When graphics processing API 16 invokes a subroutine of GPU driver 18, GPU driver 18 may formulate and issue a command that causes GPU 4 to generate displayable graphics information. For example, when graphics processing API 16 invokes a subroutine of GPU driver 18 to render a batch of graphics primitives, GPU driver 18 may issue a batch command to GPU 4 that causes GPU 4 to render the batch of graphics primitives. When GPU 4 renders the batch of graphics primitives, GPU 4 may output a raster image of the graphics primitives.

When GPU driver 18 formulates a command, GPU driver 18 may identify one or more graphics processing objects that GPU 4 may use when performing the command. Graphics processing objects may include sets of instructions that may be executed on GPU 4, sets of state register values, and other types of information that GPU 4 may need in order to perform the command. As described in detail below, one example graphics processing object may include instructions that cause PGPE 5 to perform a particular pixel-blending operation. GPU driver 18 may store these graphics processing objects in memory module 10 before API 16 invokes the subroutine of GPU driver 18. When API 16 invokes the subroutine of GPU driver 18, GPU driver 18 may identify one or more graphics processing object that GPU 4 is to use when performing a command. When GPU driver 18 identifies the graphics processing objects, GPU driver 18 may compile any graphics processing objects that are not already stored in memory module 10. GPU driver 18 may then store any such compiled graphics processing objects in memory module 10. After identifying and possibly compiling graphics processing objects that GPU 4 is to use when performing the command, GPU driver 18 may formulate the command such that the command includes references to the locations in memory module 10 at which the identified graphics processing objects are stored. When GPU 4 receives the command, GPU 4 may retrieve the graphics processing objects that are referred to in the command.

When GPU 4 receives a command, a command decoder 22 in GPU 4 may decode the command and configure PGPE 5 and a set of processing elements 6A through 6N (collectively, "processing elements 6") to perform the command. For example, command decoder 22 may configure PGPE 5 and processing elements 6 by retrieving from memory module 10 graphics processing objects indicated by the command. After retrieving a graphics processing objects, command decoder 22 may load the retrieved graphics processing objects into PGPE 5 and processing elements 6. In this example, command decoder 22 may load into PGPE 5 a set of instructions that cause PGPE 5 to perform a blending operation. Furthermore, command decoder 22 may load into processing element 6N a set of instructions that cause processing element 6N to perform a fragment shading operation. After command decoder 22 configures PGPE 5 and processing elements 6 to perform the command, command decoder 22 may provide input data to processing element 6A.

Processing elements 6 and PGPE 5 may operate as a graphics pipeline. When processing elements 6 and PGPE 5 operate as a graphics pipeline, processing element 6A may perform a first graphics operation on a first set of initial input data received from command decoder 22 and output a first set of intermediate results to processing element 6B. Processing element 6B may perform a second graphics operation on the first set of intermediate results and output a second set of intermediate results to processing element 6C. While processing element 6B is performing the second graphics operation, processing element 6A may be performing the first graphics operation on a second set of initial input data received from command decoder 22. Processing element 6C may perform a third graphics operation on the second set of intermediate results. Processing elements 6 may continue in this manner until processing element 6N outputs a pixel object to PGPE 5. PGPE 5 may then perform a graphics operation on the pixel object and output a new pixel object. PGPE 5 may output this new pixel object to one or more processing elements (e.g., processing element 6P), output this new pixel object to one or more buffers in memory module 10, or output this new pixel object to some other destination.

A pixel object is data that describes a pixel. Each pixel object may specify multiple color values. For example, a pixel object may specify a greenish color and separately specify a pink color for a single pixel. For example, a first pixel object for a first pixel may include a value that indicates a color and a transparency level of the pixel. The number of color values in the first pixel object may be different from the number of color values in a second pixel object or a third pixel object. In some circumstances, a pixel object may specify a first color in a first color format and a second color in a second color format.

When PGPE 5 receives a primary input pixel object associated with a particular pixel from processing element 6N, PGPE 5 may also receive a secondary input pixel object. For example, PGPE 5 may retrieve the secondary input pixel object from one of frame buffers 20A through 20N (collectively, "frame buffers 20") in memory module 10. Alternatively, PGPE 5 may receive the secondary input pixel object from one of processing elements 6. In some graphics operations, PGPE 5 does not use a secondary input pixel object.

The secondary input pixel object may "correspond" to the primary input pixel object. For example, PGPE 5 may receive from processing element 6N a primary input pixel object that is associated with the coordinates x = 120; y = 75 (i.e., the pixel at a position that is 120 pixel positions from the left edge of the image and 75 pixel positions from the top of the image). In this example, PGPE 5 may retrieve from frame buffer 20A a secondary input pixel object that is associated with the coordinates x = 120; y = 75. Frame buffers 20 may be areas of memory module 10 that store a frame of pixel objects. Each frame of pixel objects may represent an image that may be displayed on display unit 7. PGPE 5 may retrieve the corresponding pixel object from a most recent complete frame in one of frame buffers 20.

After retrieving the secondary input pixel object, PGPE 5 may generate a new pixel object by performing a graphics operation on the primary input pixel object and the secondary input pixel object. PGPE 5 performs the graphics operation by executing instructions in a set of instructions that command decoder 22 loaded into PGPE 5. Instructions in the set of instructions may conform to an instruction set that is specialized for the purpose of performing graphics operations. For example, the instruction set may include instructions to perform Gamma encoding and Gamma decoding operations.

The new pixel object generated by PGPE 5 may represent a result of performing a graphics operation on the primary input pixel object and, possibly, the secondary input pixel object. For example, the new pixel object may represent a result of performing a blending operation on the primary input pixel object and the secondary input pixel object. In this example, the primary input pixel object may specify that a pixel is purely red and has a transparency of 50% and the secondary input pixel object may specify that a pixel is purely green and has a transparency of 100%. In this example, the instructions may cause PGPE 5 to perform a Porter-Duff blending operation of "source over destination," where the primary input pixel object is the source and the secondary input pixel object is the destination. By performing this blending operation, PGPE 5 may generate a new pixel object that specifies a pixel having a color that is a combination of the color of the primary input pixel object and the color of the secondary input pixel object.

In addition to blending operations, PGPE 5 may be capable of performing other graphics operations. These graphics operations may include buffer compositing operations, texture combining operations, texture filtering operations, and depth/stencil operations.

When PGPE 5 performs a buffer compositing operation, PGPE 5 may receive a primary input pixel object from frame buffer 20A and may receive a secondary input pixel object from frame buffer 20B. In this example, frame buffer 20A may store pixel objects of a first image buffer of an application and frame buffer 20B may store pixel objects of a second image buffer of another application. When PGPE 5 performs the buffer compositing operation, PGPE 5 may determine whether the primary input pixel object or the secondary input pixel object is to be displayed based on whether the first image buffer is "in front of' the second image buffer, or vice versa. After detennining whether the primary input pixel object or the secondary input pixel object is to be displayed, PGPE 5 may output this pixel object to frame buffer 20C. Display unit 7 may ultimately display the contents of frame buffer 20C. Alternatively, PGPE 5 may output this new pixel object directly to a Random Access Memory Digital to Analog Converter (RAMDAC) 24. RAMDAC 24 transforms the pixel object into analog signals that may be displayed by display unit 7.

When PGPE 5 performs a texture filtering operation, PGPE 5 may receive a primary input pixel object from a graphics processing element that performs a texture address generation operation and a secondary input pixel object from a texture cache (not shown) in a one of processing elements 6 that performs the functions of a texture engine. In this example, the primary input pixel object may specify filtering factors and/or weights and the secondary input pixel object may specify multiple colors of nearby texture pixels (texels). As a result of performing the texture filtering operation, PGPE 5 may have generated a new pixel object that specifies a texture color for a texture mapped pixel using colors of the nearby texture texels specified by the secondary input pixel object. After generating this new pixel object, PGPE 5 may output the new pixel object to a graphics processing element that performs a fragment shading operation or a texturing combining operation.

When PGPE 5 performs a texture combining operation, PGPE 5 may receive a primary input pixel object from a graphics processing element that performs an attribute interpolation operation and may receive a secondary input pixel object from a graphics processing element that performs a texture filtering operation. PGPE 5 may then use the primary input pixel object and the secondary input pixel object to perform a texture combining operation. This may be useful for implementing graphics operations specified by legacy graphics processing APIs such as OpenGL ES1.x, Direct3D mobile, Direct3D 7.0, and other graphics processing APIs. PGPE 5 may output a new pixel object that results from performing the texturing combining operation to a graphics processing element that performs a pixel blending operation.

When PGPE 5 performs a depth/stenciling operation, PGPE 5 may receive a primary input pixel object from a graphics processing element that perfonns a depth interpolation operation and may receive a secondary input pixel object from a depth/stencil buffer 26 or other buffer in memory module 10. Alternatively, PGPE 5 may receive the primary input pixel object from a graphics processing element that performs a fragment shading operation. A depth value Z and a stencil value in the secondary input pixel object may be of different sizes and may have different operation representations. For example, Z may be a 24 or a 32 bit integer or a 32-bit floating point value, and the stencil value may be an 8-bit integer. The purpose of the depth/stencil operation may be to eliminate invisible pixels and primitives. After performing the depth/stencil operation, PGPE 5 may output a new pixel object back to depth/stencil buffer 26.

The techniques described in this disclosure may provide one or more advantages. For example, because PGPE 5 may execute arbitrary sets of instructions, PGPE 5 may be configured to perform a wide variety of graphics operations. Processing elements that are specialized to perform specific graphics operations may not provide this capability to perform multiple types of graphics operations. At the same time, because the instructions conform to a specialized instruction set, the complexity of each of PGPE 5 may be significantly less than that of a general processing element that executes instructions conforming to a general-purpose instruction set, such as the x86 instruction set or an instruction set used in a graphics processing element that performs a shader operation. In some cases, a software engineer may develop a new graphics operation, consistent with this disclosure, after GPU 4 has been manufactured. Because PGPE 5 may execute arbitrary sets of instructions, PGPE 5 may be configured to perform such newly developed graphics operations. In another example, sets of instructions may be automatically loaded into PGPE 5 when GPU 4 receives a command from GPU driver 18. In this case, because sets of instructions may be loaded into PGPE 5 when GPU 4 receives a command, PGPE 5 may potentially be used to perform a different graphics operation in each command.

Furthermore, a graphics pipeline may include a plurality of PGPEs. Each of the PGPEs in the graphics pipeline may be programmed to perform different graphics operations. Because each of the PGPEs may use the same chip architecture, it may cost less to manufacture these PGPEs because each of these PGPEs may be made using the same die. In addition, it may be less expensive to design and test a single chip architecture than a plurality of chip architectures for each different graphics operation.

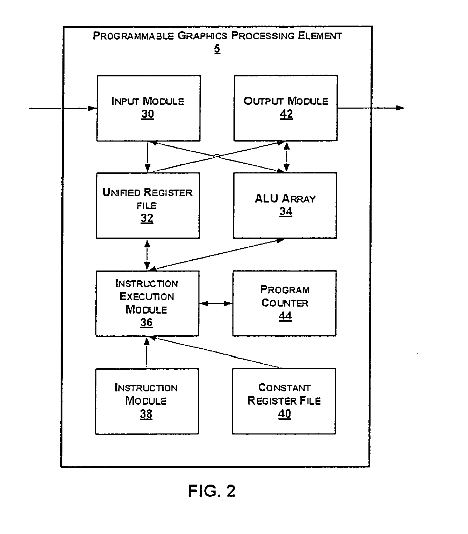

FIG. 2 is a block diagram illustrating details of an exemplary programmable graphics processing element (PGPE) 5. As illustrated in the example of FIG. 2, PGPE 5 may include an input module 30. In other example implementations of PGPE 5, input module 30 may comprise an independent module that is outside of PGPE 5. Input module 30 may receive a primary input pixel object from processing element 6N and may receive from one of frame buffers 20 a secondary input pixel object that corresponds to the primary input pixel object. The primary input pixel object and the secondary input pixel object may be formatted in different color formats. For example, the primary input pixel object may be formatted in the YUV-422 color format and the secondary input pixel object may be formatted in the YCbCr color format. When input module 30 receives a primary input pixel object and the secondary input pixel object, input module 30 may perform one or more format conversions to convert the primary input pixel object and the secondary input pixel object into the same color format. For example, input module 30 may convert the primary input pixel object and the secondary pixel object into the Red, Green, Blue (RGB) color format. Other example formats may include Red-Green-Blue-Alpha, scRGB, sRGB, YCbCr, YUV, and other formats.

Input module 30 may use an arithmetic logic unit (ALU 34) to perform these format conversions. ALU 34 may comprise an array of logic circuits that perform arithmetic operations. For example, ALU 34 may perform arithmetic operations that include single- multiplication, a double- multiplication, 2D dot product, a maximum operation, a register copy operation, a gamma encoding operation, a gamma decoding operation, and other arithmetic operations. ALU 34 may be implemented in a variety of ways. For instance, ALU 34 may be implemented such that ALU 34 uses one 8-bit integer per color component. Alternatively, ALU 34 may be implemented such that ALU 34 uses one 10-bit integer per color component. In still another alternative, ALU 34 may be implemented such that ALU 34 uses one 16-bit floating point value per color component, one 32-bit floating point value per color component, or floating point values that include other numbers of bits. In another example implementation of PGPE 5, input module 30 may include logic circuits outside ALU 34 that perform the format conversions. Furthermore, depending on the intended usage of PGPE 5, PGPE 5 may comprise multiple arithmetic logic units. For instance, if PGPE 5 is intended to have higher throughput, PGPE 5 may include more arithmetic logic units. These multiple arithmetic logic units may be single threaded or multi-threaded.

After performing a format conversion on the pixel objects, input module 30 may store the converted pixel objects in different registers in a unified register file 32. Unified register file 32 may comprise a set of one or more hardware registers that are capable of storing data. Depending on the implementation of ALU 34, each hardware register may store four 8-bit integers that represent color components, four 10-bit integers that represent color components, four 16-bit floating point values that represent color components, or otherwise.

When input module 30 stores the primary input pixel object and the secondary input pixel object in unified register file 32, an instruction execution module (IEM) 36 in PGPE 5 may fetch one or more instructions from an instruction module 38 in PGPE 5. Instruction module 38 may comprise a set of one or more hardware registers that are capable of storing instructions. Alternatively, instruction module 38 may comprise a small synchronized random access memory (SRAM) that is capable of storing instructions. IEM 36 may fetch an instruction from instruction module 38 that is indicated by a program counter 44. The value of program counter 44 may indicate a "current instruction" of PGPE 5.

When IEM 36 fetches an instruction from instruction module 38, IEM 36 may decode the instruction and fetch operands in unified register file 32 that are specified by the decoded instruction. In addition, IEM 36 may fetch operands from a constant register file 40 in PGPE 5. Constant register file 40 may comprise one or more hardware registers that are capable of storing constant values needed to perform a graphics operation using the set of instructions loaded into instruction module 38. Alternatively, constant register file 40 may comprise a small SRAM that is capable of storing constant values. For example, constant register file 40 may store a blending factor, a pattern for a legacy 2D Raster Operation (ROP), or other constant values.

An instruction may command IEM 36 to extract one or more color components from pixel objects stored in one or more registers in unified register file 32 and to use these color components as operands. For example, pixel objects stored in a register in unified register file 32 may be formatted in the RGBA format having eight bits per color component. When a pixel object is formatted in the RGBA format, bits 0 through 7 may represent the red component, bits 8 through 15 may represent the green component, bits 16 through 23 may represent the blue component, and bits 24 through 31 may represent the alpha component. The alpha component of a pixel represents the level of transparency of the pixel. In this example, an instruction may command IEM 36 to extract the red component of the pixel object and to use the red component as an operand. When IEM 36 decodes this instruction, IEM 36 may extract bits 0 through 7 from the pixel object. Other instructions may command IEM 36 to extract the blue component, the green component, or the alpha component. In addition, an instruction may command IEM 36 to extract multiple color components from a pixel object stored in one or more registers. For instance, an instruction may command IEM 36 to extract the red, green, and blue components from a pixel object stored in one or more registers. In another example, an instruction in a depth/stencil graphics operation may command IEM 36 to extract a stencil value or a Z value from a pixel object in one of the registers in unified register file 32.

An instruction may also command IEM 36 to modify an operand prior to providing the operand to ALU 34. In some instances, an instruction may use a so-called source modifier to command IEM 36 how to modify an operand. For example, an instruction may command IEM 36 to provide a negative ("-") of the operand, to provide an absolute ("abs") value of the operand, or to provide an inverted ("~") value of the operand. The inverting operation computes operation of (1.0 - x) in a normalized integer representation. In this example, an operand may originally comprise the binary value 0100 1011. If an instruction commands IEM 36 to provide this operand to ALU 34 as an inverted value, IEM 36 may provide the value 1011 0100 to ALU 34.

After fetching the operands, IEM 36 may instruct ALU 34 to perform an arithmetic operation specified by the decoded instruction using the fetched operands. When ALU 34 finishes performing the arithmetic operation, ALU 34 may provide resulting values back to IEM 36. When IEM 36 receives resulting values from ALU 34, IEM 36 may store the resulting values in unified register file 32. IEM 36 may subsequently provide these resulting values in unified register file 32 to ALU 34 as one or more operands in an arithmetic operation.

An instruction may command IEM 36 to perform an operation in normalized integer value fashion. The instruction may command IEM 36 to perform the operation in normalized integer value fashion by including a function modifier: "NORM". For example, if each color component in register file is 8-bit, the value 0 indicates the number zero and the value 255 indicates the number one. In this case, a normalized integer multiplication (A*B) actually computes a result of (A*B)/255. Otherwise non-normalized integer multiplication simply computes a result of (A*B).

An instruction may command IEM 36 to store a resulting value as a certain color component of a register of unified register file 32. In this case, an instruction may command IEM 36 to store a resulting value as a certain color component by specifying a so-called write mask that includes one bit per color component. If the write mask includes a bit that is set to '1', the instruction is commanding IEM 36 to write to the color component. For example, bits 24 through 31 of a register may store an alpha component of a pixel object stored in the register. In this example, if a write mask bit corresponding to the alpha component is set to '1', the instruction may command IEM 36 to store the alpha component of a resulting value of the pixel object. When IEM 36 receives the resulting value from ALU 34, IEM 36 may store alpha component of this resulting value in bits 24 through 31 of the register.

An instruction may also command IEM 36 to store a resulting value as a saturated value. In this case, an instruction may command IEM 36 to store a resulting value as a saturated value by including a result modifier: "SAT" in a destination register field of the instruction. For example, when ALU 34 perfonns a calculation, the resulting value may be greater than a maximum number that can be represented in a particular field of a register or may be less than a minimum number that can be represented in this field of the register. For example, suppose that a red component of a pixel object is eight bits wide. In this example, an instruction may command IEM 36 to perform a multiplication operation and to store a resulting value in the red component of the pixel object in a register. If the result of this multiplication is the binary value 1 0010 1000, there is an overflow. When the instruction commands IEM 36 to saturate the value, IEM 36 may store the binary value 1111 1111 in the red component of the pixel object in the register. Otherwise, if the instruction does not command IEM 36 to saturate the value, IEM 36 may store the binary value 0010 1000 in the red component of pixel object in the register.

After storing the resulting values in unified register file 32, IEM 36 may increment program counter 44. By incrementing program counter 44 a next instruction in instruction module 38 can be effectively made to be the new "current instruction."

As illustrated in the example of FIG. 2, PGPE 5 may include an output module 42. Output module 42 may read data from unified register file 32 and output the data to one of frame buffers 20 and/or to other buffers or locations. In other words, output module 42 may output data to multiple locations one by one or simultaneously. When output module 42 reads data from unified register file 32, output module 42 may use ALU 34 to perform one or more format conversions on the data before outputting the data. In another example implementation of PGPE 5, output module 42 may include logic circuits outside ALU 34 that perform the format conversions. Furthermore, in other example implementations of PGPE 5, output module 42 may comprise an independent module that is outside of PGPE 5.

Operations on color RGB components may be typically defined by one same instruction and operations on color alpha components may be defined by another instruction which may be either same as or different from color RGB instructions. ALU 34 may execute instructions for color RGB components and alpha components simultaneously during the same clock cycle. However, ALU 34 may execute the instructions for color RGB components and alpha components in different manners.

Each of the instructions used in PGPE 5 may conform to a single syntax. In this syntax, an instruction specifies an operation code (opcode), one or two destination registers, and up to four source registers. The source registers specified in instructions may be registers in unified register file 32, registers in constant register file 40, or another location that stores data.

The following is an example set of instructions that IEM 36 may decode and that ALU 34 may execute. The following example set of instructions includes instructions for generic arithmetic operations (e.g., add, subtract, multiply), logical arithmetic operations (e.g., and, or), program control operations (e.g., if, endif), and other types of operations. In this example set of instructions, registers in unified register file 32 are denoted by the letter 'R' followed by a subscript number and registers in constants register file 40 are denoted by the letter 'C' followed by a subscript number.

**DCL_INPUT:**

| *Op Code* | *Dest* | *Source 0* | *Source 1* | *Source 2* | *Source 3* |
|---|---|---|---|---|---|
| DCL_ | Rₓ | Input | Format | | |
| INPUT | | Name | | | |

*Function:* The DCL_INPUT instruction declares that the value in a register of unified register file 32 indicated by Dest is from a source specified by Source 0 and is formatted in the format indicated by Source 1. Command decoder 22 may load one or more DCL_INPUT instructions directly into input module 30.

**DCL_OUTPUT:**

| *Op Code* | *Dest* | *Source 0* | *Source 1* | *Source 2* | *Source 3* |
|---|---|---|---|---|---|
| DCL_ | Output | Rₓ | Format | | |
| OUTPUT | Name | | | | |

*Function:* The DCL_OUTPUT instruction declares that the value in a register of unified register file 32 indicated by Source 0 is formatted in the format indicated by Source 1 and that this value has the name indicated by Dest. Command decoder 22 may load one or more DCL_OUTPUT instructions directly into output module 42.

**DMADD:**

| *Op Code* | *Dest* | *Source 0* | *Source 1* | *Source 2* | *Source 3* |
|---|---|---|---|---|---|
| DMADD | Rₓ | Cₐ/ | C_{b}/ | C_{c}/ | C_{d}/ |
| | | Rₐ | R_{b} | R_{c} | R_{d} |

*Function:* The DMADD instruction causes ALU 34 to generate a first product by multiplying Source 0 with Source 1 and to generate a second product by multiplying Source 2 and Source 3. After generating the first product and the second product, ALU 34 adds the first product and the second product and outputs the resulting sum to register Rₓ in unified register file 32.

**DMUL:**

| *Op Code* | *Dest* | *Source 0* | *Source 1* | *Source 2* | *Source 3* |
|---|---|---|---|---|---|
| DMUL | R_{x,} | Cₐ / | C_{b} / | C_{c} / | C_{d} / |
| | R_{y} | Rₐ | R_{b} | R_{c} | R_{d} |

*Function:* The DMUL instruction causes ALU 34 to multiply Source 0 and Source 1 and to output the product to Rₓ in unified register file 32 and to multiply Source 2 and Source 3 and output the product to R_{y} in unified register file 32.

**ADD**

| *Op Code* | *Dest* | *Source 0* | *Source 1* | *Source 2* | *Source 3* |
|---|---|---|---|---|---|
| ADD | Rₓ | Cₐ/ | C_{b}/ | | |
| | | Rₐ | R_{b} | | |

*Function:* The ADD instruction causes ALU 34 to add Source 0 and Source 1 and to store the resulting sum in Rₓ in unified register file 32.

**MAX**

| *Op Code* | *Dest* | *Source 0* | *Source 1* | *Source 2* | *Source 3* |
|---|---|---|---|---|---|
| MAX | Rₓ | Cₐ/ | C_{b}/ | | |
| | | Rₐ | R_{b} | | |

*Function:* The MAX instruction causes ALU 34 to output the one of Source 0 and Source 1 that has a larger value to Rₓ in unified register file 32.

**MIN**

| *Op Code* | *Dest* | *Source 0* | *Source 1* | *Source 2* | *Source 3* |
|---|---|---|---|---|---|
| MIN | Rₓ | Cₐ / | C_{b} / | | |
| | | Rₐ | R_{b} | | |

*Function:* The MIN instruction causes ALU 34 to output the one of Source 0 and Source 1 that has a smaller value to Rₓ in unified register file 32.

**IF**

| *Op Code* | *Dest* | *Source 0* | *Source 1* | *Source 2* | *Source 3* |
|---|---|---|---|---|---|
| IF | | Cₐ/ | | | |
| | | Rₐ | | | |

*Function:* If the value in Source 0 is not zero, then execute the instructions that follow. Otherwise, skip all following instructions until an ELSE instruction or an ENDIF instruction is the current instruction.

**ELSE**

| *Op Code* | *Dest* | *Source 0* | *Source 1* | *Source 2* | *Source 3* |
|---|---|---|---|---|---|
| ELSE | | | | | |

*Function:* The instructions after ELSE and prior to an ENDIF instruction are executed when IF condition is zero.

**ENDIF**

| *Op Code* | *Dest* | *Source 0* | *Source 1* | *Source 2* | *Source 3* |
|---|---|---|---|---|---|
| ENDIF | | | | | |

*Function:* Marks the end of a branch instruction. IF, ELSE, and ENDIF instructions may be nested up to a predefined depth. For instance, up to four IF instructions may be nested within other IF instructions.

**CMP**

| *Op Code* | *Dest* | *Source 0* | *Source 1* | *Source 2* | *Source 3* |
|---|---|---|---|---|---|
| CMP | Rₓ | Cₐ/ | C_{b}/ | | |
| | | Rₐ | R_{b} | | |

*Function:* The CMP instruction causes ALU 34 to output the comparison result of Source 0 and Source 1 to Rₓ in unified register file 32. Here CMP may be one of eight options: NEVER, LESS THAN, EQUAL, LESS THAN OR EQUAL TO, GREATER THAN, GREATER THAN OR EQUAL TO, ALWAYS. If comparison result is true, result is set to all 1's, otherwise all 0's. The result of the CMP instruction may be used as a condition of an IF instruction or may be used as source operands in logic operations, such as AND, XOR, OR and NOT. The CMP instruction may have several uses. For example, the result of a CMP instruction may be used to control whether PGPE 5 outputs or drops a pixel.

**BIND**

| *Op Code* | *Dest* | *Source 0* | *Source 1* | *Source 2* | *Source 3* |
|---|---|---|---|---|---|
| BIND | | Cₐ/ | C_{b}/ | | |
| | | Rₐ | R_{b} | | |

*Function:* The BIND instruction makes a connection between two operands. One operand source0 may be a result of CMP or logic operation: AND, XOR, OR or NOT. Another operand may be a register or pixel object. For example, if a result of CMP is 0 and this result is bound to a register that stores a final blending result, PGPE 5 does not write the final blending result to one of frame buffers 20. However, if the result of CMP is 1 and this result is bound to the register that stores the final blending result, PGPE 5 writes the final blending result to the frame buffer. For another example, if a register stores the value '0' and this value is a result of an AND operation that is bound to an output pixel object, PGPE 5 may treat the output pixel object as "Discarded." In other words, PGPE 5 does not send the pixel object to the next processing elements in the GPU pipeline. MOV

| *Op Code* | *Dest* | *Source 0* | *Source 1* | *Source 2* | *Source 3* |
|---|---|---|---|---|---|
| MOV | Rₓ | Cₐ/ | | | |
| | | Rₐ | | | |

*Function:* The MOV instruction causes ALU 34 to output the value of Source 0 to Rₓ in unified register file 32. In effect, this instruction may cause the value of Source 0 to be "moved" to Rₓ.

**RCP**

| *Op Code* | *Dest* | *Source 0* | *Source 1* | *Source 2* | *Source 3* |
|---|---|---|---|---|---|
| RCP | Rₓ | Cₐ/ | | | |
| | | Rₐ | | | |

*Function:* The RCP instruction causes ALU 34 to calculate the mathematical reciprocal of the value indicated by Source 0 and to store this reciprocal value in the register of unified register file 32 indicated by Dest. A look up tables for RCP operations may be stored in constant register file 40.

**DEGAM**

| *Op Code* | *Dest* | *Source 0* | *Source 1* | *Source 2* | *Source 3* |
|---|---|---|---|---|---|
| DEGAM | Rₓ | Cₐ/ | | | |
| | | Rₐ | | | |

*Function:* The DEGAM instruction causes ALU 34 to perform a gamma decoding operation on the value of Source 0 and to output the resulting value to Rₓ in unified register file 32. A look up table for DEGAM operations may be stored in constant register file 40.

**GAM**

| *Op Code* | *Dest* | *Source 0* | *Source 1* | *Source 2* | *Source 3* |
|---|---|---|---|---|---|
| GAM | Rₓ | Cₐ / | | | |
| | | Rₐ | | | |

*Function:* The GAM instruction causes ALU 34 to perform a gamma encoding operation on the value of Source 1 and to output the resulting value to Rₓ in unified register file 32. A look up tables for GAM operations may be stored in constant register file 40.

**AND**

| *Op Code* | *Dest* | *Source 0* | *Source 1* | *Source 2* | *Source 3* |
|---|---|---|---|---|---|
| AND | Rₓ | Cₐ/ | C_{b}/ | | |
| | | Rₐ | R_{b} | | |

*Function:* The AND instruction causes ALU 34 to perform a bitwise AND operation on the values of Source 0 and Source 1 and to output the resulting value to Rₓ in unified register file 32. XOR

| *Op Code* | *Dest* | *Source 0* | *Source 1* | *Source 2* | *Source 3* |
|---|---|---|---|---|---|
| XOR | Rₓ | Cₐ/ | C_{b}/ | | |
| | | Rₐ | R_{b} | | |

*Function:* The XOR instruction causes ALU 34 to perform a bitwise exclusive or (XOR) operation on the values of Source 0 and Source 1 and to output the resulting value to Rₓ in unified register file 32.

**OR**

| *Op Code* | *Dest* | *Source 0* | *Source 1* | *Source 2* | *Source 3* |
|---|---|---|---|---|---|
| OR | Rₓ | Cₐ / | C_{b} / | | |
| | | Rₐ | R_{b} | | |

*Function:* The OR instruction causes ALU 34 to perform a bitwise OR operation on the values of Source 0 and Source 1 and to output the resulting value to Rₓ in unified register file 32.

**NOT**

| *Op Code* | *Dest* | *Source 0* | *Source 1* | *Source 2* | *Source 3* |
|---|---|---|---|---|---|
| NOT | Rₓ | Cₐ/ | | | |
| | | Rₐ | | | |

*Function:* The NOT instruction causes ALU 34 to perform a bitwise NOT operation on the value of Source 0 and to output the resulting value to Rₓ in unified register file 32.

**END**

| *Op Code* | *Dest* | *Source 0* | *Source 1* | *Source 2* | *Source 3* |
|---|---|---|---|---|---|
| END | | | | | |

*Function:* The END instruction notifies IEM 36 that this is the last instruction in an instruction set.

Some programmable graphics processing elements may include more or fewer instructions than those described above. For example, if PGPE 5 is located in a position of a graphics processing pipeline after a processing element that performs a Z-interpolation operation, PGPE 5 may perform depth/stencil graphics operations. Because depth/stencil graphics operations do not manipulate color values, it may be unnecessary to perform the color correction operations associated with the GAM and DEGAM instructions outlined above. In this example, ALU array 34 in PGPE 5 may not include circuitry to perform the GAM and DEGAM instructions. In another example, if PGPE 5 is positioned in a graphics processing pipeline in order to perfonn a texture filtering operation, PGPE 5 may include one or more additional instructions in order to access a general look up table to convert colors from one representation to another representation.

Many different graphics operations may be performed using the example instruction set outlined above. For example, the OpenVG API specifies three blending modes: a VG_BLEND_MULTIPLY mode, a VG_BLEND_SCREEN mode, and a VG_BLEND_DARKEN module. The VG_BLEND_MULTIPLY mode is mathematically defined by the formula α_{src} * c_{src} * (1-α_{dst}) + α_{dst} * c_{dst} * (1-α_{src}) + α_{src} * c_{src} * α_{dst} * c_{dst}. In this formula α_{src} is the alpha component of a source pixel, α_{dst} is the alpha component of a destination pixel, c_{src} is the color of the source pixel, and c_{dst} is the color of the destination pixel. As used herein, the "source pixel" may indicate the pixel object received from processing element 6N and the "destination pixel" may indicate the corresponding pixel object received from one of frame buffers 20. PGPE 5 may perform the VG_BLEND_MULTIPLY blending mode by executing the following instructions in the example instruction set provided above:

| *Op Code* | *Dest* | *Source 0* | *Source 1* | *Source 2* | *Source 3* |
|---|---|---|---|---|---|
| DMUL | R0.rgb | R0.a | R0.rgb | R1.a | R1.rgb |
| | R1.rgb | | | | |
| DMADD | R2.rgb | (1-R1.a) | R0.rgb | (1-R0.a) | R1.rgb |
| DMADD | R0.rgb | 1 | R2.rgb | R0.rgb | R1.rgb |

In this example, register values may be associated with the suffix ".rgb". The ".rgb" suffix commands IEM 36 to extract a group of bits that specify RGB color information of a pixel object stored within a register. For instance, if bits 0-7 specify the red component of a pixel, bits 8-15 specify the green component of the pixel, bits 16-23 specify the blue component of the pixel, and bits 24-31 specify the alpha component of the pixel, then the ".rgb" suffix may denote bits 0 through 23. Similarly, the ".a" suffix used in the above example commands IEM 36 to extract a group of bits that specify an alpha value of a pixel object stored within a register. In the previous example, the ".a" suffix may denote bits 24 through 31 of the pixel. PGPE 5 may include hardware that automatically extracts bits of pixel objects from registers denoted by the ".rgb" suffix, the ".a" suffix, and other suffixes.

The VG_BLEND_SCREEN blending mode is defined by the formula α_{src} * c_{src} + α_{dst} * c_{dst} - α_{src} * c_{src} * α_{dst} * c_{dst}. In this formula α_{src} is the alpha component of a source pixel, α_{dst} is the alpha component of a destination pixel, c_{src} is the color of the source pixel, and c_{dst} is the color of the destination pixel. PGPE 5 may perform the VG_BLEND_SCREEN blend mode by executing the following instructions in the example instruction set provided above:

| *Op Code* | *Dest* | *Source 0* | *Source 1* | *Source 2* | *Source 3* |
|---|---|---|---|---|---|
| DMUL | R0.rgb | R0.a | R0.rgb | R1.a | R1.rgb |
| | R1.rgb | | | | |
| DMADD | R0.rgb | (1-R1.rgb) | R0.rgb | 1 | R1.rgb |

The VG_BLEND_DARKEN blend mode is defined by the formula min(α_{src} * C_{src} + α_{dst} * c_{dst} * (1 - α_{src}), α_{dst} * c_{src} + α_{src} * C_{src} * (1 - α_{dst})). In this formula α_{src} is the alpha component of a source pixel, α_{dst} is the alpha component of a destination pixel, c_{src} is the color of the source pixel, and c_{dst} is the color of the destination pixel. PGPE 5 may perform the VG_BLEND_DARKEN blend mode by executing the following instructions in the example instruction set provided above:

| *Op Code* | *Dest* | *Source 0* | *Source 1* | *Source 2* | *Source 3* |
|---|---|---|---|---|---|
| DMUL | R0.rgb | R0.a | R0.rgb | R1.a | R1.rgb |
| | R1.rgb | | | | |
| DMADD | R2.rgb | 1 | R0.rgb | 1-R0.a | R1.rgb |
| DMADD | R0.rgb | 1-R1.a | R0.rgb | 1 | R1.rgb |
| MIN | R0.rgb | R2.rgb | R0.rgb | | |

In another example, PGPE 5 may also perform Porter-Duff blending graphics operations. The Porter-Duff blending operations include a "source" operation, a "destination over source" operation, a "source in destination" operation, and a "destination in source" operation. The following sets of instructions may be executed by PGPE 5 to perform the Porter-Duff blending operations:

**Source:**

| *Op Code* | *Dest* | *Source 0* | *Source 1* | *Source 2* | *Source 3* |
|---|---|---|---|---|---|
| MUL | R2.rgb | 1 | R0.rgb | | |

**Source over Destination:**

| *Op Code* | *Dest* | *Source 0* | *Source 1* | *Source 2* | *Source 3* |
|---|---|---|---|---|---|
| DMADD | R2.rgb | 1 | R0.rgb | 1-R0.a | R1.rgb |

**Destination over source:**

| *Op Code* | *Dest* | *Source 0* | *Source 1* | *Source 2* | *Source 3* |
|---|---|---|---|---|---|
| DMADD | R2.rgb | 1-R1.a | R0.rgb | 1 | R1.rgb |

**Source in destination:**

| *Op Code* | *Dest* | *Source 0* | *Source 1* | *Source 2* | *Source 3* |
|---|---|---|---|---|---|
| MUL | R2.rgb | R1.a | R0.rgb | | |

**Destination in source:**

| *Op Code* | *Dest* | *Source 0* | *Source 1* | *Source 2* | *Source 3* |
|---|---|---|---|---|---|
| MUL | R2.rgb | R0.a | R1.rgb | | |

In another example, PGPE 5 may convert color information in the YUV-422 color format to color information in the RGB color format. PGPE 5 may perform the following operations to perform this conversion:

| *Op Code* | *Dest* | *Source 0* | *Source 1* | *Source 2* | *Source 3* |
|---|---|---|---|---|---|
| DMADD | R3.rgb | R0.y | C0.rgb | R0.u | C1.rgb |
| DMADD | R0.rgb | R0.v | C2.rgb | 1 | C3.rgb |
| ADD | R0.rgb | R0.rgb | R3.rgb | | |

In this example, C0.rgb, C1.rgb, C2.rgb, and C3.rgb are values in constants register file 40 that represent coefficients of a 4x3 matrix for a conversion from the YUV color format to the RGB color format. The suffix ".y" denotes bits in a register that are associated with a "Y" value in the YUV color format, the suffix ".u" denotes bits in the register that are associated with a "U" value in the YUV color format, and the suffix ".v" denotes bits in the register that are associated with a "V" value in the YUV color format. YUV components may be stored into the same bits of a register as RGB components. In other words, one register may store YUV components or may store RGB components.

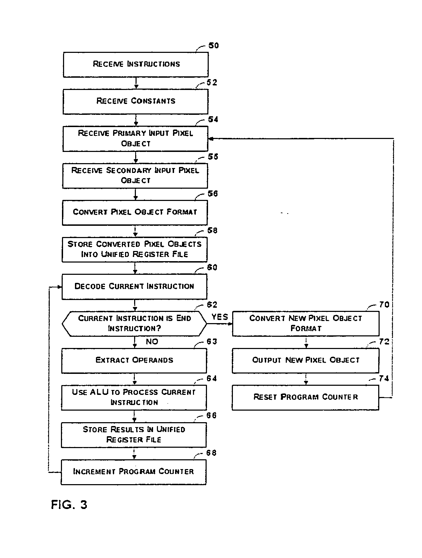

FIG. 3 is a flowchart that illustrates an example operation of PGPE 5. Initially, PGPE 5 may receive instructions from command decoder 22 in GPU 4 (50). PGPE 5 may store these instructions in instruction module 38. Next, PGPE 5 may receive constant values from command decoder 22 in GPU 4 (52). PGPE 5 may store these constant values in constant register file 40.

After PGPE 5 receives the constant values, input module 30 in PGPE 5 may receive a primary input pixel object from processing element 6N (54). PGPE 5 may then retrieve a secondary input pixel object (55). For example, PGPE 5 may retrieve from one of frame buffers 20 a secondary input pixel object that is associated with the same pixel position as the first pixel object. In some graphics operations, PGPE 5 does not retrieve the secondary input pixel object. In these graphics operations, PGPE 5 performs the graphics operation solely using the primary input pixel object.

When input module 30 receives the primary input pixel object and the secondary input pixel object, input module 30 may convert the primary pixel object and/or the secondary input pixel object from a first color format to a second color format (56). For example, input module 30 may use ALU 34 to convert one of the input pixel objects from the YUV-442 color format to an RGB color format. After input module 30 converts the input pixel objects from the first color format into the second color format, input module 30 may store the converted version of the primary input pixel object into one or more registers in unified register file 32 and may store the converted version of the secondary input pixel object into one or more registers in unified register file 32 (58).

When input module 30 stores the converted input pixel objects into registers in unified register file 32, IEM 36 may decode a current instruction of the instructions in instruction module 38 (60). The current instruction is the instruction in instruction module 38 indicated by program counter 44. After IEM 36 decodes the current instruction, IEM 36 may determine whether the current instruction is an "end" instruction (62). In another implementation, if there is no branch instructions (e.g., IF...ELSE...ENDIF), the effect of an "END" instruction may be achieved by counting down the total number of instructions to zero, instead of an "END" instruction.

If the current instruction is not the "end" instruction ("NO" of 62), IEM 36 may extract operands specified by the current instruction from pixel objects stored in registers of unified register file 32 and constants register file 40 (63). When IEM 36 extracts an operand from a pixel object stored in a register, IEM 36 may extract specific bits of a pixel object stored in the register that are specified by the current instruction. After IEM 36 extracts the operands, IEM 36 may instruct ALU 34 to process the current instruction using the extracted operands (64). For example, IEM 36 may decode an ADD instruction and instruct ALU 34 to perform an addition operation. After ALU 34 processes the current instruction, IEM 36 may store the results in a register of unified register file 32 specified by the current instruction (66). When IEM 36 finishes storing the results in unified register file 32, IEM 36 may increment program counter 44 (68). Incrementing program counter 44 may effectively make a next instruction in instruction module 38 the new "current instruction." Next, IEM 36 may loop back and decode the current instruction (60).

If the current instruction is the "end" instruction ("YES" of 62), a new pixel object has been generated in one or more registers in unified register file 32. The new pixel object represents a result of performing a graphics operation on the primary input pixel object and/or the secondary input pixel object. For example, the new pixel object may represent a result of blending of the primary input pixel object and the secondary input pixel object. After determining that the current instruction is the "end" instruction, IEM 36 may cause output module 42 to convert the new pixel object from a first color format to a second color format (70). A DCL_OUTPUT instruction stored in output module 42 may specify a register in unified register file 32 that contains the new pixel object and may specify a color format into which output module 42 is to convert the new pixel object. When output module 42 finishes converting the new pixel object, output module 42 may output the converted version of the new pixel object (72). For example, output module 42 may output the converted version of the new pixel object to one of frame buffers 20 or a next pipeline element. After output module 42 outputs the converted version of the new pixel object, IEM 36 may reset program counter 44 (74). After resetting program counter 44, PGPE 5 may loop back and receive a new primary input pixel object from processing element 6N (54).

In one or more exemplary embodiments, the functions described may be implemented in hardware, software, and/or firmware, or any combination thereof. If implemented in hardware, the functions may be implemented in one or more microprocessors, microcontrollers, digital signal processors (DSPs), application specific integrated circuits (ASICs), field programmable gate arrays (FPGAs), or the like. Such components may reside within a communication system, data writing and/or reading system, or other systems. If implemented in software, the functions may be stored on or transmitted over as one or more instructions or code on a computer-readable medium. Computer-readable media includes tangible computer storage media and communication media including any medium that facilitates transfer of a computer program from one place to another. A storage media may be any available media that can be accessed by a computer. By way of example, and not limitation, such computer-readable media can comprise RAM, Flash memory, read-only memory (ROM), electrically-erasable programmable read-only memory (EEPROM), compact disc read-only memory (CD-ROM) or other optical disk storage, magnetic disk storage or other magnetic storage devices, or any other medium that can be used to store desired program code in the form of instructions or data structures and that can be accessed by a computer. The term "computer-readable medium" may also be defined as a tangible computer program product. Disk and disc, as used herein, includes compact disc (CD), laser disc, optical disc, digital versatile disc (DVD), floppy disk and blu-ray disc where *"disks"* usually reproduce data magnetically, while *"discs"* reproduce data optically with lasers. Combinations of the above should also be included within the scope of computer-readable media.

Various embodiments of the invention have been described. These and other embodiments are within the scope of the following claims.

## Claims

1. A method comprising:
receiving a first set of instructions in a programmable graphics processing element (PGPE), wherein the PGPE is a processing element in a graphics pipeline of a graphics processing unit (GPU);
receiving a first pixel object with the PGPE; and generating a second pixel object by executing the first set of instructions with the PGPE,
wherein the second pixel object represents a result of performing a first graphics operation on the first pixel object,
wherein the first graphics operation comprises a graphics operation selected from a group consisting of: a blending operation, a buffer compositing operation, a texture combining operation, a texture filtering operation, and a depth/stencil operation.

2. The method of claim 1, wherein the first set of instructions is provided to the PGPE in response to a command from a GPU driver.

3. The method of claim 2,
wherein the GPU driver issues the command in response to an invocation of a second subroutine in the GPU driver from a graphics processing application programming interface (API); and
wherein the graphics processing API invokes the first subroutine of the GPU driver when a software application invokes a second subroutine of the graphics processing API at runtime.

4. The method of claim 3, wherein the graphics processing API comprises a vector graphics API.

5. The method of claim 1,
wherein the PGPE is a first PGPE in the graphics pipeline, and
wherein the method further comprises:
receiving a second set of instructions in a second programmable graphics
processing element (PGPE) in the graphics pipeline;
receiving a fourth pixel object with the second PGPE; and
generating a fifth pixel object by executing the second set of instructions with the second PGPE,
wherein the fifth pixel object represents a result of performing a second graphics operation on the fourth pixel object,
wherein the second graphics operation comprises a graphics operation selected from a group consisting of: a blending operation, a buffer compositing operation, a texture combining operation, a texture filtering operation, and a depth/stencil operation,
wherein the first PGPE and the second PGPE are implemented using the same chip architecture.

6. The method of claim 1, wherein the method further comprises receiving a third pixel object from a frame buffer.

7. The method of claim 6,
wherein the method further comprises receiving the first pixel object from a processing element that precedes the PGPE in the graphics pipeline,
wherein when the first graphics operation is a blending operation, and
wherein generating the second pixel object comprises executing the first set of instructions in order to perform a blending operation on the first pixel object and the third pixel object.

8. The method of claim 1, wherein generating the second pixel object comprises converting the first pixel object from a first color format into a second color format.

9. The method of claim 8, wherein converting the first pixel object comprises performing an arithmetic operation on the first pixel object using an Arithmetic Logic Unit (ALU) in the PGPE.

10. The method of claim 1, further comprising outputting, with the PGPE, the second pixel object.

11. The method of claim 10, further comprising displaying the second pixel object on a display unit.

12. The method of claim 11, wherein outputting the second pixel object comprises:
retrieving the second pixel object from a register file in the PGPE; and
converting the second pixel object from a first color format to a second color format.

13. The method of claim 11,
wherein the first graphics operation is a depth/stencil graphics operation,
wherein outputting the second pixel object comprises storing the second pixel object in a depth/stencil buffer.

14. The method of claim 11,
wherein the first graphics operation is the buffer compositing graphics operation, and
wherein outputting the second pixel object comprises outputting the second pixel object to a Random Access Memory Digital-to-Analog Converter (RAMDAC).

15. The method of claim 11, wherein outputting the second pixel object comprises storing the second pixel object in a frame buffer.

16. The method of claim 11, wherein outputting the second pixel object comprises storing the second pixel object in a next processing element of the graphics pipeline.

17. The method of claim 16,
wherein the first graphics operation is the texture combining graphics operation, and
wherein the next processing element performs a pixel blending operation on the second pixel object.

18. The method of claim 16,
wherein the first graphics operation is the texture filtering operation, and
wherein the next processing element performs a fragment shading operation on the second pixel object.

19. The method of claim 1, wherein executing the first set of instructions comprises:
retrieving a current instruction from an instruction module in the PGPE;
performing, with an arithmetic logic unit (ALU) in the PGPE, an arithmetic operation specified by the current instruction using operands specified by the current instruction; and
storing, in a register file in the PGPE, data generated by the ALU when the ALU performs the arithmetic operation using the operands.

20. The method of claim 19,
wherein retrieving the current instruction comprises retrieving an instruction indicated by a program counter in the PGPE; and
wherein the method further comprises incrementing the program counter after finishing the current instruction from the instruction module.

21. The method of claim 19, wherein performing the arithmetic operation comprises performing a gamma encoding operation.

22. The method of claim 19, further comprising retrieving the operands specified by the current instruction from the register file.

23. The method of claim 22, wherein retrieving the operands comprises extracting a color component of the first pixel object stored in one or more registers of the register file and provides the extracted color component to the ALU as one of the operands, wherein the current instruction specifies the color component.

24. The method of claim 23, wherein extracting the color component from the first pixel object comprises extracting an alpha component of the first pixel object.

25. The method of claim 19,
wherein the method further comprises storing constant values in a constants register file in the PGPE; and
wherein executing the first set of instructions comprises retrieving operands specified by the current instruction from the constants register file.

26. The method of claim 1, wherein the set of instructions is a first set of instructions, the method further comprising:
receiving a third set of instructions in the PGPE, thereby overwriting some or all of the first set of instructions, wherein the third set of instructions is not identical to the first set of instructions;
receiving a sixth pixel object from the graphics processing element that precedes the PGPE in the graphics pipeline; and
executing, with the PGPE, the second set of instructions in order to perform a third graphics operation on the sixth pixel object in order to generate a seventh pixel object,
wherein the third graphics operation is a graphics operation selected from the group of: a blending operation, a buffer compositing operation, a texture combining operation, a texture filtering operation, and a depth/stencil operation.

27. The method of claim 20, wherein the third graphics operation is a different one of the graphics operation than the first graphics operation.

28. The method of claim 1, wherein the graphics processing element that precedes the PGPE comprises a fragment shader.

29. The method of claim 1, wherein instructions in the first set of instructions are selected from a group of instructions that includes generic arithmetic and logic operations.

30. A device comprising:
a graphics processing unit (GPU) that includes a graphics pipeline,
wherein the graphics pipeline comprises:
a first processing element that outputs a first pixel object; and
a programmable graphics processing element (PGPE); and
wherein the PGPE comprises:
an instruction module that receives and stores a first set of instructions;
an input module that receives the first pixel object from the first processing element; and
an arithmetic logic unit (ALU) that generates a second pixel object by performing a first sequence of arithmetic operations,
wherein each of the arithmetic operations in the first sequence of arithmetic operations is specified by a different instruction in the first set of instructions,
wherein the second pixel object represents a result of performing a first graphics operation on the first pixel object,
wherein the first graphics operation comprises a graphics operation selected from a group consisting of: a blending operation, a buffer compositing operation, a texture combining operation, a texture filtering operation, and a depth/stencil operation.

31. The device of claim 30, further comprising a central processing unit (CPU) that executes a GPU driver, wherein the GPU driver provides the set of instructions to the instruction module.

32. The device of claim 31,
wherein the CPU executes a graphics programming interface (API) that invokes a first subroutine of the GPU driver,
wherein the GPU driver provides the set of instructions to the instruction module when the graphics processing API invokes the first subroutine of the GPU driver,
wherein the CPU executes a software application that invokes a second subroutine of the graphics processing API, and
wherein the graphics processing API invokes the first subroutine of the GPU driver when the software application invokes the second subroutine of the graphics processing API.

33. The device of claim 32, wherein the graphics processing API comprises a vector graphics API.

34. The device of claim 30,
wherein the PGPE is a first PGPE,
wherein the graphics pipeline includes a second PGPE that performs a second graphics operation,
wherein the first PGPE and the second PGPE are implemented using the same chip architecture, and
wherein the first graphics operation is different than the second graphics operation.

35. The device of claim 30,
wherein when the first graphics operation is a blending operation,
wherein the input module receives the first pixel object from the first processing element,
wherein the input module receives a third pixel object from a frame buffer, and
wherein the first set of instructions cause the ALU to perform a blending operation on the first pixel object and the third pixel object in order to generate the second pixel object.

36. The device of claim 30, wherein the input module converts the first pixel object from a first color format to a second color format.

37. The device of claim 36, wherein the input module uses the ALU to convert the first pixel object from the first color format to the second color format.

38. The device of claim 30, wherein the PGPE further comprises an output module to output the second pixel object.

39. The device of claim 38,
wherein the PGPE further comprises a unified register file that includes registers to store data; and
wherein the output module receives the second pixel object from a register in the unified register file and converts the second pixel object from a first color format to a second color format.

40. The device of claim 38,
wherein the device further comprises a frame buffer that stores one or more frames of pixel objects; and
wherein the output module outputs the second pixel object to the frame buffer.

41. The device of claim 38,
wherein the device further comprises a depth/stencil buffer,
wherein the first graphics operation is the depth/stencil graphics operation, and
wherein the output module outputs the second pixel object to the depth/stencil buffer.

42. The device of claim 38,
wherein the device further comprises a Random Access Memory Digital-to-Analog Converter (RAMDAC),
wherein the first graphics operation is the buffer compositing graphics operation, and
wherein the output module outputs the second pixel object to the RAMDAC.

43. The device of claim 38,
wherein the graphics pipeline further comprises a second processing element; and
wherein the output module outputs the second pixel object to the second processing element.

44. The device of claim 43,
wherein the first graphics operation is the texture combining graphics operation, and
wherein the second processing element comprises a pixel blender.

45. The device of claim 43,
wherein the first graphics operation is the texture filtering graphics operation, and
wherein the second processing element comprises a fragment shader.

46. The device of claim 30, wherein the PGPE further comprises:
a unified register file that includes registers to store data; and an instruction execution module (IEM) that retrieves a current instruction of the first set of instructions from the instruction module, instructs the ALU to perform an arithmetic operation specified by the current instruction using operands specified by the current instruction, and stores data generated by the ALU when the ALU performs the arithmetic operation using the operands.

47. The device of claim 46,
wherein the PGPE further comprises a program counter that indicates the current instruction in the instruction module; and
wherein the IEM increments the program counter after the IEM finishes the current instruction from the instruction module.

48. The device of claim 46, wherein the arithmetic operation comprises a gamma encoding operation.

49. The device of claim 46, wherein the IEM retrieves the operands specified by the current instruction from the unified register file.

50. The device of claim 49,
wherein the current instruction specifies that one of the operands is a color component of a pixel object stored in one or more registers of the unified register file; and
wherein, when the IEM retrieves the one of the operands, the IEM extracts the specified color component of the pixel object stored in the one or more registers of the unified register file and provides the specified color component to the ALU as the one of the operands.

51. The device of claim 50, wherein the color component is an alpha component of the pixel object stored in the register.

52. The device of claim 47,
wherein the PGPE further comprises a constants register file to receive and store constant values; and
wherein the IEM retrieves one of the operands specified by the current instruction from the constants register file.

53. The device of claim 30,
wherein the instruction module receives and stores a second set of instructions, thereby overwriting some or all of the first set of instructions, wherein the second set of instructions is not identical to the first set of instructions;
wherein the input module receives a fourth pixel object from the first processing element; and
wherein the ALU generates a fifth pixel object by performing a second sequence of arithmetic operations,
wherein each of the arithmetic operations in the second sequence of arithmetic operations is specified by a different instruction in the second set of instructions,
wherein the fifth pixel object represents a result of performing a second graphics operation on the fourth pixel object, and
wherein the second graphics operation is a graphics operation selected from the group of: a blending operation, a buffer compositing operation, a texture combining operation, a texture filtering operation, and a depth/stencil operation.

54. The device of claim 30, wherein the first processing element comprises a fragment shader.

55. The device of claim 30, wherein instructions in the first set of instructions are selected from a group of instructions that includes generic arithmetic and logic operations.

56. A programmable graphics processing element (PGPE) comprising:
an instruction module that receives and stores a set of instructions;
an input module that receives a first pixel object from a graphics processing element that precedes the PGPE in a graphics pipeline in a graphics processing unit (GPU); and
an arithmetic logic unit (ALU) that generates a second pixel object by performing a sequence of arithmetic operations,
wherein each arithmetic operation in the sequence of arithmetic operations are specified by a different instruction in the set of instructions, and
wherein the second pixel object represents a result of performing a graphics operation on the first pixel object, and
wherein the first graphics operation comprises a graphics operation selected from a group consisting of: a blending operation, a buffer compositing operation, a texture combining operation, a texture filtering operation, and a depth/stencil operation.

57. The PGPE of claim 56, further comprising:
a unified register file that includes registers to store data; and an instruction execution module (IEM) that retrieves a current instruction of the set of instructions from the instruction module, instructs the ALU to perform an arithmetic operation specified by the current instruction using operands specified by the current instruction, and stores data generated by the ALU in the unified register file.

58. A computer-readable medium comprising instructions that, when executed, cause a programmable graphics processing element (PGPE) to:
receive a set of instructions in the PGPE, wherein the PGPE is a processing element in a graphics pipeline of a graphics processing unit (GPU);
receive a first pixel object from a graphics processing element that precedes the PGPE in the graphics pipeline; and generate a second pixel object by executing the set of instructions with the PGPE,
wherein the second pixel object represents a result of performing a first graphics operation on the first pixel object, and
wherein the first graphics operation comprises a graphics operation selected from a group consisting of: a blending operation, a buffer compositing operation, a texture combining operation, a texture filtering operation, and a depth/stencil operation.

59. The computer-readable medium of claim 58, wherein the instructions that cause the PGPE to generate the second pixel object comprise instructions that cause the PGPE to:
retrieve a current instruction from an instruction module in the PGPE;
perform, with an Arithmetic Logic Unit (ALU) in the PGPE, an arithmetic operation specified by the current instruction using operands specified by the current instruction; and
store, in a unified register file in the PGPE, data generated by the ALU when the ALU performs the arithmetic operation using the operands.

60. A device comprising:
means for processing graphics, wherein the means for processing graphics includes a graphics pipeline,
wherein the graphics pipeline comprises:
means for generating and outputting a first pixel object; and means for performing graphics operations, wherein the means for blending pixel objects comprises:
means for receiving and storing a set of instructions; means for receiving the first pixel object; and means for generating a second pixel object by performing a
sequence of arithmetic operations,
wherein each of the arithmetic operations is specified by a different instruction in the set of instructions, and
wherein the second pixel object represents a result of performing a graphics operation on the first pixel object, and
wherein the graphics operation comprises a graphics operation selected from a group consisting of: a blending operation, a buffer compositing operation, a texture combining operation, a texture filtering operation, and a depth/stencil operation.

61. The device of claim 60, wherein the means for blending pixel objects further comprises:
means for storing data, wherein the means for storing data comprises a set of registers to store pieces of the data; and
means for retrieving a current instruction in the set of instructions from the means for storing a set of instructions, instructing the means for generating the second pixel object to perform an arithmetic operation specified by the current instruction using operands specified by the current instruction, and storing data generated by the means for generating the second pixel object when the means for generating the second pixel object performs the arithmetic operation using the operands.
